# EUROPEAN PATENT APPLICATION

(11) **EP 2 571 227 A1**
(43) Date of publication of application: **20.03.2013**
(21) Application number: 12184007.8
(22) Date of filing: 12.09.2012
(51) Int. Cl.: H04L 29/06, G06F 21/62

(54) **System for controlling access to user resources and method thereof**

(30) Priority: 14.09.2011 KR 20110092424
(71) Applicant: Samsung Electronics Co., Ltd., Suwon-si, Gyeonggi-do, 443-742 (KR)
(72) Inventor: Choi, Yoon-Chan, Gyeonggi-do (KR); Lee, Jin-Suk, Gyeonggi-do (KR)
(74) Representative: Jenkins, Richard Gavin

(57) **Abstract**

Controlling access to a resource by firstly assigning an access level to the resource and then defining an access agent as a group of users or as an individual user. When access is requested it is firstly determined which is the access level of the requested resource and then it is determined which is the access agent for the resource. Access is then controlled according to the determined access level and access agent.

## Description

### BACKGROUND OF THE INVENTION

### 1. Field of the Invention

The present invention relates generally to a system for controlling access to user resources and a method thereof.

### 2. Description of the Related Art

As is widely known in the art, a user typically cannot get services until providing his/her own personal information to some degree. Personal information, which is information on an individual, refers to things capable of identifying an individual, such as name, address, sex, birth date, phone number and the like. Accordingly, the personal information can include even all information of an individual, such as type of occupation, position, or a fact and evaluation thereabout, and information of a photograph, a video, music, if they are able to identify an individual. Also, although the personal information may not be enough to identify a specific individual, if other information is available to identify the individual through easy inquiry in combination with the personal information, even this information is treated as personal information.

Recently, the mobile communication environment has made it possible to create, inquire, and search personal information on the Web. For one example, a terminal user registers postings given his/her own ID on a noticeboard of a Website. The postings also can be, as above, treated as personal information in a broad sense. However, as the value and usability of personal information greatly increases, leakage of a lot of personal information may take place, and various kinds of resulting bad events may occur. This result causes problems in which individual privacy is intruded and the healthy growth of the social economy is interrupted. Therefore, there is a need in the art for methods to control access to personal information existing in a server and protect the personal information.

### SUMMARY OF THE INVENTION

An object of the present invention is to substantially solve at least the above problems and/or disadvantages and to provide at least the advantages below. Accordingly, one object of the present invention is to provide a user-resource access control system and method capable of sharing user resources with security and reliability.

Another object of the present invention is to provide a user-resource access control system and method complying with regulations on access to user resources.

A further object of the present invention is to provide a user-resource access control system and method for, when a nonspecific user has access to user resources, controlling the access based on access regulations defining an access level and an access agent.

Yet another object of the present invention is to provide a user-resource access control system and method capable of setting regulations on access to user data existing according to applications.

The above objects are achieved by providing a system for controlling access to user resources and a method thereof.

In accordance with an aspect of the present invention, a system for controlling access to user resources includes a client device and a server. The client device receives an input of access regulations, which define an access level and access agent for first-user resources, from a first user, and transmits the received access regulations to the server. When a second user has access to the user resources, the server controls the access in compliance with the access regulations.

In accordance with an aspect of the present invention, a method for controlling access to user resources includes determining an access level for corresponding user resources, determining an access agent for the user resources, and controlling access to the user resources according to the determined access level and access agent.

In accordance with further an aspect of the present invention, a method for controlling access to user resources includes, determining, when a nonspecific user requests to inquire corresponding user resources, whether the user resources have been set to access regulations of an access level of granting inquiry, and when the user resources have been set to the access regulations of the access level of granting inquiry, determining whether the user resources have been set to access regulations including, as an access agent, the nonspecific user having requested the inquiry, and when the user resources have been set to the access regulations including the nonspecific user having requested the inquiry as the access agent, providing the user resources to the nonspecific user having requested the inquiry.

In accordance with an aspect of the present invention, a method for controlling access to user resources includes, when a nonspecific user requests to search target-user resources matching with a search condition, determining whether the searched target-user resources identical to the search condition have been set to access regulations of an access level of granting search, and when the searched target-user resources have been set to the access regulations of the access level of granting search, determining whether the searched target-user resources have been set to access regulations including, as an search agent, the nonspecific user having requested the search, and when the searched target-user resources have been set to the access regulations including the nonspecific user having requested the search as the search agent, sending a notification of the searched target-user resources to the nonspecific user having requested the search.

### BRIEF DESCRIPTION OF THE DRAWINGS

The above and other objects, features and advantages of the present invention will become more apparent from the following detailed description when taken in conjunction with the accompanying drawings in which:
FIG. 1 illustrates a construction of a user-resource access control system according to an embodiment of the present invention;
FIG. 2 illustrates a process of setting regulations on access to user resources in a user-resource access control system according to an embodiment of the present invention;
FIG. 3 illustrates a process of controlling access to user resources in a server of a user-resource access control system according to an embodiment of the present invention;
FIG. 4 illustrates a process of inquiring user resources in a user-resource access control system according to an embodiment of the present invention; and
FIG. 5 illustrates a process of searching user resources in a user-resource access control system according to an embodiment of the present invention.

### DETAILED DESCRIPTION OF EMBODIMENTS OF THE INVENTION

Embodiments of the present invention will be described herein below with reference to the accompanying drawings. In the following description, well-known functions or constructions are not described in detail since they would obscure the invention in unnecessary detail. Terms described below, which are defined considering functions in the present invention, can be different depending on user and operator's intention or practice. Therefore, the terms should be defined on the basis of the disclosure throughout this specification.

Embodiments of the present invention provide a user-resource access control system and method complying with regulations on access to user resources.

Embodiments of the present invention provide a system and method for controlling access to user resources and protecting personal information. According to the present invention, the system provides access regulations defining an access level of a nonspecific user for user resources. Further, the system provides access regulations defining an access agent for the user resources.

In the access regulations, the access level can be distinguished into an access level for granting access and an access level for denying access. The access level for granting access can be distinguished into an access level for granting all inquiries (i.e., admission) and searches, an access level for granting searches but denying inquiries, and an access level for denying searches but granting inquiries. The access level for denying access indicates the access level for denying all inquiries and searches. In the access regulations, the access agent indicates an agent who is granted for access with the access level for granting access. For one example, the access agent can be defined as friends or all users.

The user resources include personal information. The personal information, which regards an individual, refers to information identifying an individual, such as name, address, sex, birth date, and phone number. Accordingly, the personal information can include all information including a body of an individual, an occupation, position, or a fact and evaluation thereof, and information identifying an individual such as a photograph, a video, or music. Also, although the personal information may not be sufficient to identify a specific individual, if other information can identify the individual through easy inquiry in combination with the personal information, even this information is treated as personal information. Further, the user resources include data that is updated on a per-user basis in an application. For one instance, in a game application, user data indicating scores per user is updated.

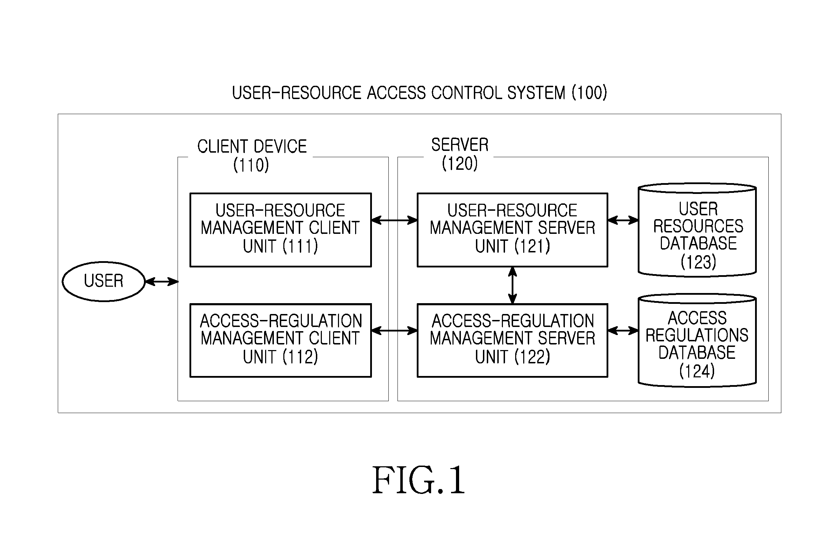

FIG. 1 illustrates a construction of a user-resource access control system according to an embodiment of the present invention.

Referring to FIG. 1, the user-resource access control system 100 shares resources by networking a client device 110 as a service demander and a server 120 in a form of a service provider. A user has access to the server 120 through the client device 110, and may provide or inquire and search user resources. The server 120 maintains the security of accessed resources and responds to a demand, by applying rule-based access regulations to all users who intend to access in managing user resources.

The client device 110 includes a user-resource management client unit 111 controlling inquiry and search for user resources, and an access-regulation management client unit 112 controlling regulations on access to user resources.

The server 120 includes a user-resource management server unit 121 controlling inquiry and search for user resources, and an access-regulation management server unit 122 controlling regulations on access to user resources. Further, the server 120 includes a user resources database 123 for storing user resources, and an access regulations database 124 for storing regulations on access to user resources.

The user-resource management client unit 111 receives an input of a target user IDentifier (ID) or a search condition from a user to inquire and search corresponding user resources, and delivers the target user ID or search condition to the user-resource management server unit 121. The user-resource management client unit 111 receives the inquired and searched result from the user-resource management server unit 121 and provides this result to the user.

The access-regulation management client unit 112 receives an input of access regulations from a user, and delivers the access regulations to the access-regulation management server unit 122.

When receiving a request for inquiry and search for corresponding user resources from the user-resource management client unit 111, the access-regulation management server unit 122 determines whether there is authority to access the inquiry-and-search-requested user resources with reference to the access regulations database 124, and notifies the user-resource management server unit 121 of this. When the access authority is determined, the user-resource management server unit 121 forwards the inquiry-and-search-requested user resources to the user-resource management client unit 111.

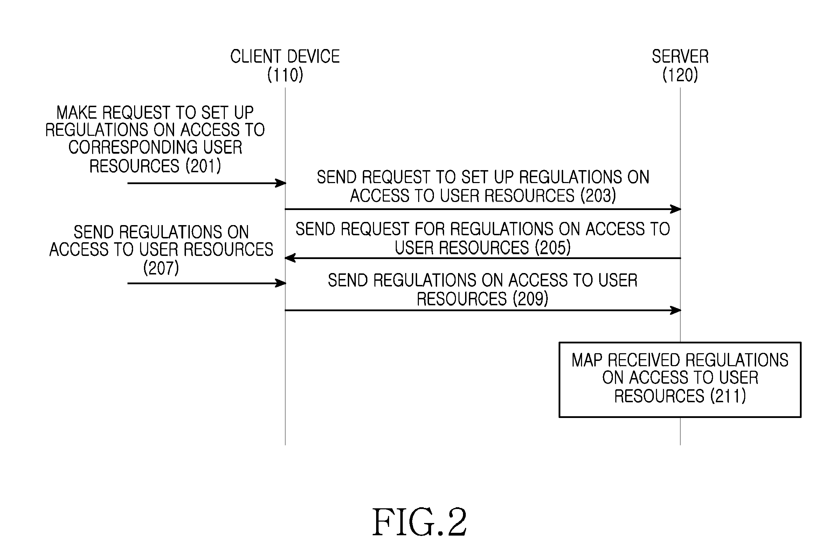

FIG. 2 illustrates a process of setting regulations on access to user resources in a user-resource access control system according to an embodiment of the present invention.

Referring to FIG. 2, in step 201, a manager requests setting up regulations on access to corresponding user resources through the client device 110. In response, in step 203, the client device 110 sends a request for setting up the regulations on the access to the user resources to the server 120. In step 205, the server 120 sends a request for the regulations on the access to the user resources to the client device 110, and the client device 110 notifies the manager, which is granted to set up the regulations on the access to the user resources. The manager can be authenticated in a separate step. For one example, the manager inputs a login ID and password registered through the client device 110, and is granted from the server 120 to set up the regulations on the access to the user resources.

In step 207, the manager inputs the regulations on the access to the user resources through the client device 110. In step 209, the client device 110 transmits the input regulations on the access to the user resources to the server 120.

In step 211, the server 120 maps the received regulations on the access to the user resources.

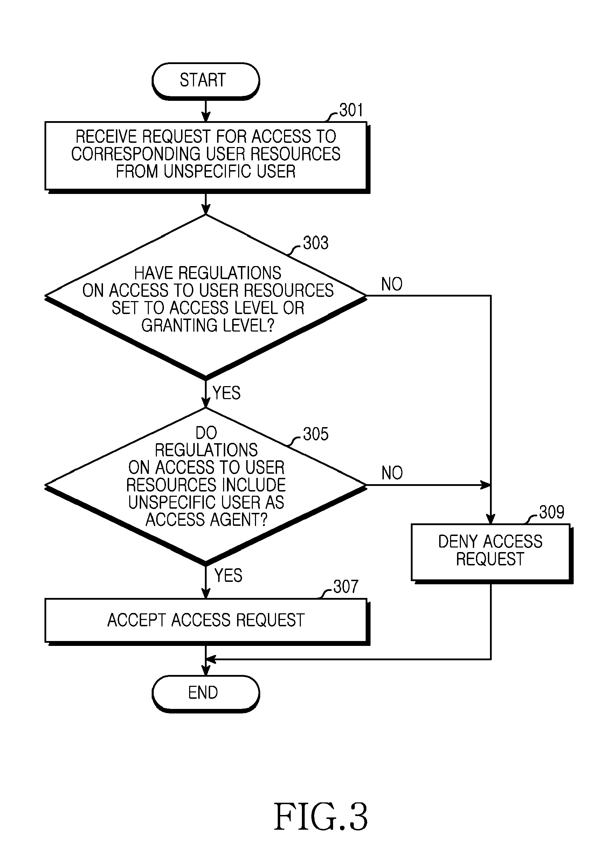

FIG. 3 illustrates a process of controlling access to user resources in a server of a user-resource access control system according to an embodiment of the present invention.

Referring to FIG. 3, in step 301, the server 120 receives a request for access to corresponding user resources from a nonspecific user. In step 303, the server 120 determines whether regulations on the access to the user resources have been set to an access level of granting access. The access to the user resources indicates inquiry or search.

When it is determined in step 303 that the regulations on the access to the user resources have been set to the access level of granting access, in step 305, the server 120 determines whether the regulations on the access to the user resources include the nonspecific user as an access agent. In contrast, when it is determined in step 303 that the regulations on the access to the user resources have been set to an access level of denying access, in step 309, the server 120 denies the access request of the nonspecific user.

When it is determined in step 305 that the regulations on the access to the user resources include the nonspecific user as the access agent, in step 307, the server 120 accepts the access request of the nonspecific user. In contrast, when it is determined in step 305 that the regulations on the access to the user resources do not include the nonspecific user as the access agent, in step 309, the server 120 denies the access request of the nonspecific user.

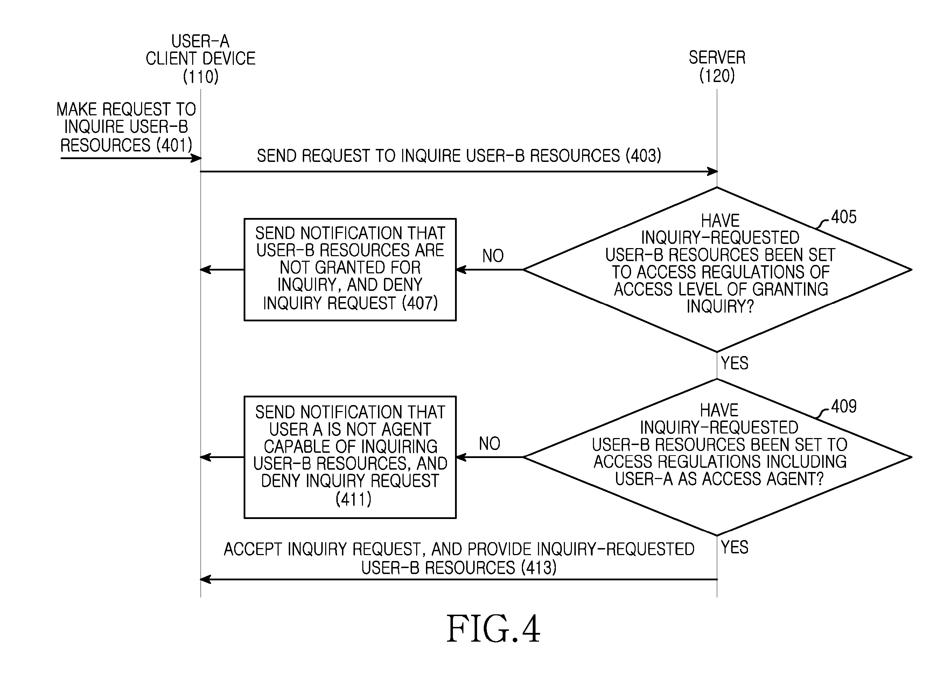

FIG. 4 illustrates a process of inquiring user resources in a user-resource access control system according to an embodiment of the present invention.

Referring to FIG. 4, in step 401, a user A requests to inquire user-B resources through a user-A client device 110. In step 403, the user-A client device 110 sends a request to inquire the user-B resources to the server 120.

In step 405, the server 120 determines whether the inquiry-requested user-B resources have been set to access regulations of an access level of granting inquiry. When it is determined in step 405 that the inquiry-requested user-B resources have not been to the access regulations of the access level of granting inquiry, in step 407, the server 120 sends the user-A client device 110 a notification that the user-B resources are not granted for inquiry, and denies the inquiry request of the user A. In contrast, when it is determined in step 405 that the inquiry-requested user-B resources have been set to the access regulations of the access level of granting inquiry, in step 409, the server 120 determines whether the user-B resources have been set to access regulations including the user A as an access agent.

When it is determined in step 409 that the user-B resources have been set to access regulations not including the user A as the access agent, in step 411, the server 120 sends the user-A client device 110 a notification that the user A is not an agent capable of inquiring the user-B resources, and denies the inquiry request of the user A. In contrast, when it is determined in step 409 that the user-B resources have been set to the access regulations including the user A as the access agent, in step 413, the server 120 accepts the inquiry request of the user A, and provides the user-B resources to the user-A client device 110.

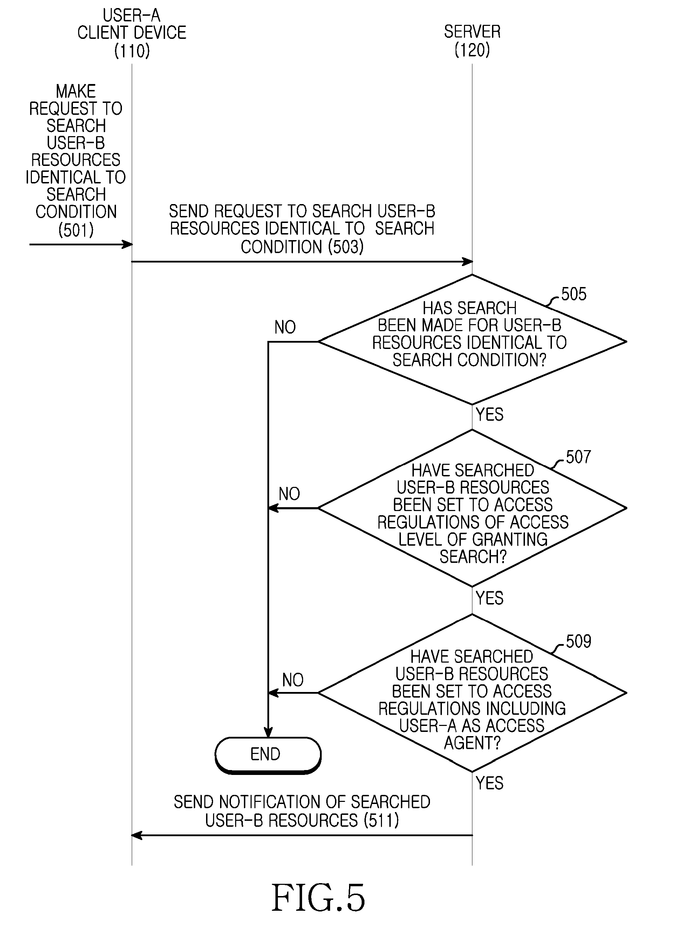

FIG. 5 illustrates a process of searching user resources in a user-resource access control system according to an embodiment of the present invention.

Referring to FIG. 5, in step 501, a user A requests to search user-B resources matching with a search condition through a user-A client device 110. In step 503, the user-A client device 110 sends a request to search for the user-B resources identical to the search condition, to the server 120.

In step 505, the server 120 determines whether the search has been made for the user-B resources identical to the search condition . When it is determined in step 505 that the search has been made for the user-B resources identical to the search condition, in step 507, the server 120 determines whether the searched user-B resources have been set to access regulations of an access level of granting search. In contrast, when it is determined in step 505 that the search has not been made for the user-B resources identical to the search condition, the server 120 terminates the process.

When it is determined in step 507 that the searched user-B resources have been set to access regulations of an access level of denying search, the server 120 terminates the process. In contrast, when it is determined in step 507 that the searched user-B resources have been set to access regulations of an access level of granting search, in step 509, the server 120 determines whether the searched user-B resources have been set to access regulations including the user A as an access agent.

When it is determined in step 509 that the searched user-B resources have been set to access regulations not including the user A as the access agent, the server 120 terminates the process. In contrast, when it is determined in step 509 that the searched user-B resources have been set to the access regulations including the user A as the access agent, in step 511, the server 120 sends a notification of the searched user-B resources to the user-A client device 110.

After that, the user A can inquire the notified user-B resources via the process of FIG. 4.

As described above, in a system and method for managing user resources according to the present invention, when a nonspecific user has access to user resources, the access is controlled in compliance with access regulations defining an access level and an access agent, so more security and reliability are given in accessing the user resources.

Alternate embodiments of the present invention can also comprise computer readable codes on a non-transitory computer readable medium. The computer readable medium includes any data storage device that can store data that can be read by a computer system. Examples of a computer readable medium include magnetic storage media (such as ROM, floppy disks, and hard disks), optical recording media (such as CD-ROMs or DVDs), and storage mechanisms. The computer readable medium can also be distributed over network coupled computer systems so that the computer readable code is stored and executed in a distributed fashion. Also, functional programs, codes, and code segments for accomplishing the present invention can be construed by programmers of ordinary skill in the art to which the present invention pertains.

While the invention has been shown and described with reference to certain embodiments thereof, it will be understood by those skilled in the art that various changes in form and details may be made therein without departing from the spirit and scope of the invention as defined by the appended claims.

## Claims

1. A method for controlling access to user resources, the method comprising:
determining an access level for corresponding user resources;
determining an access agent for the user resources; and
controlling access to the user resources according to the determined access level and access agent.

2. The method of claim 1, wherein the access level that is determined for the user resources is granting access or denying access.

3. The method of claim 2, wherein, when it is the access level of denying access, controlling the access to the user resources according to the determined access level and access agent denies the access to the user resources.

4. The method of claim 2, wherein, when it is the access level of granting access, controlling the access to the user resources according to the determined access level and access agent accepts the access if a user having requested to access the user resources is comprised in the determined access agent.

5. The method of claim 2, wherein the access level for the user resources is defined as granting all search and inquiry, granting search but denying inquiry, denying search but granting inquiry, or denying all search and inquiry.

6. The method of claim 1, wherein the access agent for the user resources is selected among pre-classified user groups or individual users.

7. The method of claim 1, wherein the user resources are personal information identifying an individual.

8. The method of claim 1, wherein the user resources are user data existing in an application.

9. A system for controlling access to user resources, the system comprising:
a client device for receiving an input of access regulations, which define an access level and access agent for first-user resources, from a first user, and transmitting the received access regulations to a server; and
the server for controlling, when a second user has access to the user resources, the access in compliance with the access regulations.

10. The system of claim 9, wherein the access level is defined as granting access or denying access.

11. The system of claim 10, wherein the server denies the access of the second user when denying access is the access level.

12. The system of claim 10, wherein the server accepts the access of the second user when granting access is the access level and the second user is comprised in the defined access agent.

13. The system of claim 10, wherein the access level of granting access is defined as granting all search and inquiry, granting search but denying inquiry, or denying search but granting inquiry.

14. The system of claim 9, wherein the access agent is selected among pre-classified user groups or individual users.

15. The system of claim 9, wherein the first user is a user granted an authority to define regulations on access to the user resources from the server.
